# EUROPÄISCHE PATENTSCHRIFT

(11) **EP 1 474 288 B1**
(45) Veröffentlichungstag und Bekanntmachung des Hinweises auf die Patenterteilung: **13.04.2005**
(21) Anmeldenummer: 03762451.7
(22) Anmeldetag: 04.07.2003
(51) Int. Cl.: B32B 3/28, D06J 1/00

(54) **STRECKBARES BAHNMATERIAL**
FLEXIBLE BAND MATERIAL
MATERIAU EN BANDE ETIRABLE

(30) Priorität: 05.07.2002 DE 10230552
(43) Veröffentlichungstag der Anmeldung: 10.11.2004
(73) Patentinhaber: Brinkmann, Peter, 65549 Limburg a.d. Lahn (DE)
(72) Erfinder: Brinkmann, Peter, 65549 Limburg a.d. Lahn (DE)
(74) Vertreter: Brüning, Rolf
(86) Internationale Anmeldenummer: PCT/DE2003/002237
(87) Internationale Veröffentlichungsnummer: WO 2004/005016

(56) Entgegenhaltungen:
- WO-A-95/28536
- WO-A-98/56576
- DE-A- 2 328 383
- FR-A- 2 445 765
- GB-A- 672 525
- US-A- 2 202 870
- US-A- 2 222 343
- US-A- 3 300 368
- US-A- 3 556 921
- US-A- 3 574 109

## Beschreibung

Die Erfindung betrifft streckbares Bahnmaterial mit zumindest einer Tragschicht und einer Deckschicht, wobei das Bahnmaterial eine Vielzahl von Falten aufweist, deren Kanten kreuzend zur Streckrichtung und im wesentlichen parallel zueinander verkaufen. Derartiges Bahnmaterial ist an strukturierte Flächen mit Unebenheiten, Krümmungen oder sphärischen Wölbungen anschmiegbar und wird für Verpackungs- und Abdichtzwecke verwendet.

Ein solches Bahnmaterial ist aus der DE 195 23 834 A1 bekannt. Dabei handelt es sich um von Hand verformbares in zumindest einer Richtung streckbares Abdeckmaterial mit einem Durchbrüche aufweisenden dehnbaren Trägerelement und einer flächendeckenden Beschichtung, wobei das Trägerelement zumindest auf seiner Oberseite eine mit ihm verbundene Beschichtung aus dünnem Flachmaterial aufweist und wobei das beschichtete Abdeckmaterial entgegen der Streckrichtung gestaucht ist. In der Praxis besteht das Trägerelement aus weichgeglühtem Aluminium in Form eines Gitters aus Streckmetall mit gewellten Stegen. Dieses ist zur Abdichtung mit einer aus dehnfähigem Kunststoff bestehenden Haut beschichtet, welche auf Vliesmaterial aufgebracht ist. Das mit der Haut versehene Vlies bildet die flächendeckende Beschichtung des Trägerelements. Die wasserdichte Abdeckung einer Fläche mit diesem Abdeckmaterial wird durch die auf ein Vlies aufgebrachte und vom Metallgitter getragene Kunststoffhaut bewirkt. Es hat sich gezeigt, dass die Herstellung dieses mindestens dreischichtigen Abdeckmaterials relativ aufwendig ist, denn das benötigte Metallgitter ist einerseits teuer und andererseits als Streckmetall scharfkantig, so dass es vor der Beschichtung sauber entgratet sein muss, damit es nicht die dichtende Kunststoffhaut verletzt und durchsticht.

Aufgabe der vorliegenden Erfindung ist es ein wasserdichtes Bahnnrateriat zur Verfügung zu stellen, das preiswerter als das bekannte Abdeckmaterial und weniger empfindlich ist

Die Aufgabe wird erfindungsgemäß dadurch gelöst, dass die Tragschicht Fasern aus organischem Material enthält, dass die Deckschicht eine Folie aus duktilem Metall aufweist und dass die Falten als aneinander grenzende Mikrofalten ausgebildet sind, in denen das für die Streckung benötigte zusätzliche Material gespeichert ist.

Die Fasern aus organischem Material enthaltende Tragschicht verleiht dem Bahnmaterial eine hohe Reißfestigkeit. Als organisches Material kommen natürliche Fasern wie Wolle oder Seide sowie solche aus Kunststoff in Frage, wobei Länge, Durchmesser, Querschnittsform und chemische Zusammensetzung der Fasern dem Verwendungszweck des Bahnmaterials optimal angepasst werden können. Als besonders geeignet werden Fasern aus Polyethylen, Polypropylen, Polyacrylnitril, Polyester oder Polyamid empfohlen. Die Tragschicht erhöht die Reißfestigkeit der metallischen Deckschicht und verhindert eine zu scharfe Knickung derselben im Bereich der Kanten der Mikrofalten.

Die Metallfolie der Deckschicht ist plastisch verformbar und erzeugt aufgrund der Duktilität des verwendeten Metalls keine Rückstellkräfte, so dass das Bahnmaterial beispielsweise nach dem Anschmiegen an einen unebenen Untergrund die Form beibehält und nicht bestrebt ist in seine vorherige Form zurückzukehren. Als duktiles Metall für die Metallfolie der Deckschicht kommen vorzugsweise Blei, Kupfer oder weichgeglühtes Aluminium in Frage.

Als Mikrofalten im Sinne der Erfindung werden kleine Falten bezeichnet, von denen etwa 10 oder mehr pro Zentimeter des Bahnmaterials angeordnet sind, vorzugsweise 30 oder mehr Falten pro Zentimeter. Die Falten grenzen aneinander, wobei Kanten mit Abwinkelung im Uhrzeigersinn und solche mit entgegengesetzter Abwinkelung einander abwechseln. Der Abstand zweier entgegengesetzt abgewinkelter Kanten soll nicht wesentlich mehr als 1 mm betragen und muss nicht immer gleich sein.
Auch muss eine Falte nicht über die gesamte Breite des Bahnmaterials verlaufen. Die Mikrofalten können durchaus unregelmäßig und ungleichförmig sein. Die Mikrofalten werden vorzugsweise in die zuvor glatte zweischichtige Bahn eingeprägt, indem das Material entgegen oder schräg zur Streckrichtung gestaucht wird. Das Maß der Stauchung bestimmt die später mögliche Streckung. So kann beispielsweise eine auf ihre halbe ursprüngliche Länge gestauchte Bahn später auf knapp die doppelte Länge gestreckt werden. Das für die Streckung benötigte zusätzliche Material ist in den Mikrofalten gespeichert, die beim Strecken flach ausgezogen werden. Es versteht sich, dass die maximale Streckung in rechtwinklig zu den Kanten der Mikrofalten verlaufender Streckrichtung erreichbar ist. Erfolgt die Streckung in schräger Richtung zu den Kanten der Mikrofalten, so kann das Bahnmaterial außerdem in einer zweiten Richtung gestreckt werden. Erfolgt beispielsweise die erste Streckung in einem Winkel von 45° zu den Kanten der Mikrofalten, so ist außerdem eine zweite Streckung im Winkel von 90° zur Richtung der ersten Streckung möglich. Dabei kann gegenüber der Ebene des ungestreckten Bahnmaterials beispielsweise eine kalottenförmige Beule oder eine Vertiefung ausgeformt werden.

Das erfindungsgemäße Bahnmaterial kann beispielsweise zum Verpacken von Gegenständen oder zur Abdichtung von Öffnungen verwendet werden, wobei sich das Bahnmaterial aufgrund seiner Streckbarkeit plastisch von Hand verformen und an die Oberfläche des zu bedeckenden Gegenstandes anpassen lässt und nicht in seine ursprüngliche Form zurückfedert.

Die Fasern enthaltende Tragschicht kann je nach vorgesehenem Verwendungszweck des Bahnmaterials nicht nur als Folie ausgebildet sein, sondern insbesondere als Vlies, als Gewebe oder als Gewirke, wobei das Flächengewicht zusätzlich variiert werden kann.

Das Bahnmaterial ist sehr leicht, weil die Deckschicht lediglich eine dünne Metallfolie aufweist. Daher ist das Bahnmaterial nicht nur lichtundurchlässig und wasserdicht, sondern auch wasserdampf-diffusionsdicht.

Sofern auf die dichte Ausführung kein Wert gelegt wird, sondern das Bahnmaterial eine Lüftung ermöglichen soll, so können Schlitze vorzugsweise quer zu den Kanten vorgesehen sein. Vorteilhaft ist die Anordnung der Schlitze in versetzten Reihen, so dass das Bahnmaterial quer zur Streckrichtung ähnlich wie Streckmetall auseinander gezogen werden kann.

Ein besonders preiswertes und leicht verformbares Bahnmaterial weist eine Tragschicht aus Polypropylenvlies mit einem Flächengewicht von 10 g/m² und eine Deckschicht aus Aluminiumfolie mit einer Dicke von 7 µm und etwa 30 Mikrofalten pro cm auf. Bei Verwendung von Polypropylenvlies mit einem Flächengewicht von 20 g/m² und einer Aluminiumfolie von 20 µm Dicke sind etwa 15 Mikrofalten pro cm optimal.

Das Bahnmaterial ist besonders leicht an sehr stark zerklüftete Oberflächenstrukturen anpassbar, wenn es quer zu den Kanten der Mikrofalten zusätzlich grobe Wellen aufweist. Die Länge der Wellen sollte zumindest mehr als 1 mm betragen, um Verknickungen der Mikrofalten zu vermeiden. Dadurch kann die Metallfolie nicht an verzweigenden spitzen Graten und/oder Tälern einreißen.

Die Deckschicht kann zusätzlich eine zweite oder mehrere Lagen aufweisen. Die äußere Lage der Deckschicht kann dem vorgesehenen Verwendungszweck des Bahnmaterials optimal angepasst sein, beispielsweise kann die äußere Lage korrosionsschützend, witterungsbeständig und/oder farbig ausgebildet sein. Derartiges Bahnmaterial kann beispielsweise ein Polyestervlies mit einem Flächengewicht von 30 g/m² und eine mit 10 g Lack pro m² beschichtete Aluminiumfolie von 20 µm Dicke und etwa 12 Mikrofalten pro cm aufweisen.

Das Bahnmaterial ist besonders witterungsbeständig und/oder reißfest, wenn es zusätzlich eine Beschichtung aus plastisch oder thermoplastisch verformbarem Material aufweist. Die zusätzliche Beschichtung kann beispielsweise aus Bitumen, Polyisobutylen, Acrylat Polyurethan, Hotmelt oder einem Schaumstoff bestehen, vorzugsweise einem solchen mit hohem Erholungsvermögen. Vorteilhaft ist auch eine zusätzliche Beschichtung, die unter dem Einfluss von Feuchtigkeit quillt. Vorzugsweise ist diese zusätzliche Beschichtung auf die Deckschicht aufgebracht, kann jedoch auch auf die Tragschicht oder aber beidseitig aufgebracht sein. Da das Bahnmaterial selbst bereits dicht ist, genügt bereits eine sehr dünne Beschichtung, um besondere Oberflächeneigenschaften zu erzielen. Auch kann die zusätzliche Beschichtung zwischen Deckschicht und Tragschicht angeordnet sein. Ein äußerst reißfestes Bahnmaterial weist beispielsweise in der Reihenfolge von unten nach oben Polyestervlies, Polyesterfolie, Aluminiumfolie und Lack auf.

Zum Verschließen einer Öffnung kann das Bahnmaterial besonders leicht an den Rand der Öffnung angeschlossen werden, wenn das Bahnmaterial zumindest an einem seiner beiden Längsränder eine Klebeschicht aus dehnbarem selbstklebendem Material aufweist. Die Klebeschicht kann als schmaler Streifen aufgebracht sein. Dadurch kann das Bahnmaterial ohne zusätzlichen Kleber mit der Unterlage verbunden werden. Um ein Verkleben in aufgerolltem Zustand des Bahnmaterials zu vermeiden kann die Klebeschicht mit einer vor Ort abziehbaren Schutzfolie abgedeckt sein.

Vorzugsweise ist die Klebeschicht auf die Tragschicht aufgebracht

Für bestimmte Anwendungszwecke können aus dem Bahnmaterial entsprechende Formteile hergestellt sein.

Weitere Einzelheiten, Vorteile und Merkmale der Erfindung ergeben sich nicht nur aus den Ansprüchen, den diesen zu entnehmenden Merkmalen, für sich und/oder in Kombination, sondern auch aus der nachstehenden Beschreibung eines in der Zeichnung dargestellten bevorzugten Aufführungsbeispiels.

Es zeigen:
- Fig. 1: einen Längsschnitt durch das erfindungsgemäße Bahnmaterial in vergrößerter Darstellung,
- Fig. 2: das Bahnmaterial aus Fig. 1 mit einer zusätzlichen Beschichtung und
- Fig. 3: das Bahnmaterial aus Fig. 1 mit einem Klebeschicht aus dehnbarem selbstklebendem Material.

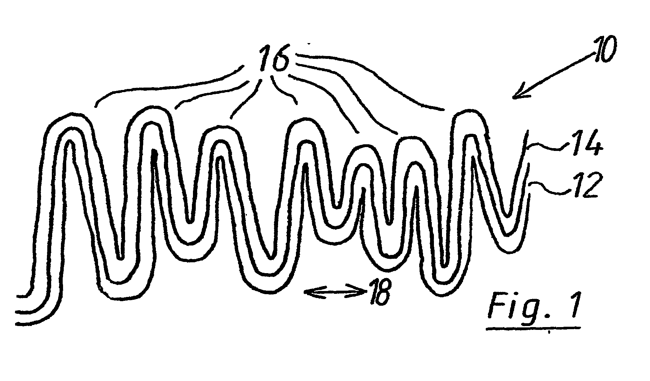

In Fig. 1 ist schematisch das erfindungsgemäße Bahnmaterial 10 vergrößert im Längsschnitt dargestellt. Das Bahnmaterial 10 weist eine Tragschicht 12 und eine mit dieser verbundene Deckschicht 14 auf. Die Tragschicht 12 ist als Faservlies mit statistisch verteilten Fasern ausgebildet Die Deckschicht 14 ist als 7 µm dicke Folie aus ausgeglühtem Aluminium ausgebildet. Tragschicht 12 und Deckschicht 14 sind vollflächig miteinander verklebt. Beide Schichten 12 und 14 sind in zahlreichen unregelmäßigen Mikrofalten 16 gefaltet, deren Kanten die durch den Doppelpfeil 18 angedeutete Streckrichtung kreuzen und im wesentlichen parallel zueinander verlaufen. Die Höhe der Falten beträgt weniger als 1 mm.

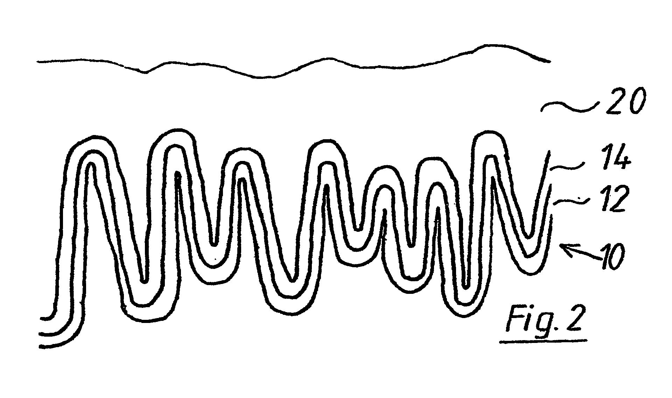

Fig. 2 zeigt ebenfalls vergrößert im Längsschnitt das Bahnmaterial 10 aus Fig. 1. Auf der die Deckschicht 14 aufweisenden Oberseite ist zusätzlich eine dicke Bitumenschicht 20 aufgebracht.

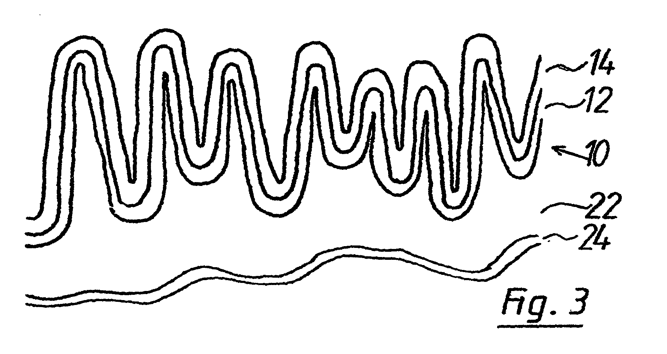

Fig. 3 zeigt ebenfalls vergrößert im Längsschnitt das Bahnmaterial 10 aus Fig. 1. Auf der die Tragschicht 12 aufweisenden Unterseite ist zusätzlich ein Klebeschicht 22 aus selbstklebendem Butylkautschuk aufgebracht. Der Klebeschicht 22 ist mit einer Schutzfolie 24 abgedeckt, um ein Verkleben des Bahnmaterials im aufgerollten Lieferzustand zu verhindern.

## Patentansprüche

1. Streckbares Bahnmaterial (10) mit zumindest einer Tragschicht (12) und einer Deckschicht (14), wobei das Bahnmaterial (10) eine Vielzahl von Falten (16) aufweist, deren Kanten kreuzend zur Streckrichtung (18) und im wesentlichen parallel zueinander verlaufen,
**dadurch gekennzeichnet,**
**dass** die Tragschicht (12) Fasern aus organischem Material enthält,
**dass** die Deckschicht (14) eine Folie aus duktilem Metall aufweist und
**dass** die Falten als aneinander grenzende Mikrofalten (16) ausgebildet sind, in denen das für die Streckung benötigte zusätzliche Material gespeichert ist.

2. Streckbares Bahnmaterial nach Anspruch 1,
**dadurch gekennzeichnet,**
**dass** die Tragschicht (12) als Vlies ausgebildet ist.

3. Streckbares Bahnmaterial nach Anspruch 1,
**dadurch gekennzeichnet,**
**dass** die Tragschicht (12) als Gewebe ausgebildet ist.

4. Streckbares Bahnmaterial nach Anspruch 1,
**dadurch gekennzeichnet,**
**dass** die Tragschicht (12) als Gewirke ausgebildet ist

5. Streckbares Bahnmaterial nach einem der Ansprüche 1 bis 4,
**dadurch gekennzeichnet,**
**dass** die Deckschicht zumindest zwei Lagen aufweist

6. Streckbares Bahnmaterial nach einem der Ansprüche 1 bis 5,
**dadurch gekennzeichnet,**
**dass** das Bahnmaterial (10) quer zu den Kanten der Mikrofalten (16) zusätzlich gewellt ist.

7. Streckbares Bahnmaterial nach einem der Ansprüche 1 bis 6,
**dadurch gekennzeichnet,**
**dass** das Bahnmaterial (10) zusätzlich eine Beschichtung (20) aus plastisch verformbarem Material aufweist.

8. Streckbares Bahnmaterial nach einem der Ansprüche 1 bis 7,
**dadurch gekennzeichnet,**
**dass** Bahnmaterial (10) zumindest an einem seiner beiden Längsränder eine Klebeschicht (22) aus dehnbarem selbstklebendem Material aufweist.

9. Streckbares Bahnmaterial nach Anspruch 8,
**dadurch gekennzeichnet,**
**dass** die Klebeschicht (22) auf die Tragschicht (12) aufgebracht ist

10. Streckbares Bahnmaterial nach Anspruch 8 oder 9,
**dadurch gekennzeichnet,**
**dass** die Klebeschicht (22) mit einer Schutzfolie (24) abgedeckt ist.

## Claims

1. Stretchable band material (10) with at least one supporting layer (12) and one covering layer (14), the band material (10) showing a multiplicity of folds (16) whose edges extend crosswise with respect to the stretching direction (18) and substantially parallel to each other,
**characterized in**
**that** the supporting layer (12) comprises fibres of organic material,
**that** the covering layer (14) shows a foil of ductile material and
**that** the folds have the shape of microscopic folds (16) bordering one another, in which the additional material needed for stretching is stored.

2. Stretchable band material according to claim 1,
**characterized in**
**that** the supporting layer (12) appears in the form of non-woven material.

3. Stretchable band material according to claim I,
**characterized in**
**that** the supporting layer (12) appears in the form of textile fabric.

4. Stretchable band material according to claim 1,
**characterized in**
**that** the supporting layer (12) appears in the form of knitted fabric.

5. Stretchable band material according to one of claims 1 to 4,
**characterized in**
**that** the covering layer shows at least two plies.

6. Stretchable band material according to one of claims 1 to 5,
**characterized in**
**that** the band material (10) is additionally corrugated, transversely to the edges of the microscopic folds (16).

7. Stretchable band material according to one of claims 1 to 6,
**characterized in**
**that** the band material (10) additionally shows a coating (20) of plastically mouldable material.

8. Stretchable band material according to one of claims 1 to 7,
**characterized in**
**that** the band material (10) shows a bonding sheet (22) of extensible self-adhesive material at least on one of its both longitudinal edges.

9. Stretchable band material according to claim 8,
**characterized in**
**that** the bonding sheet (22) is applied on the supporting layer (12).

10. Stretchable band material according to claim 8 or 9,
**characterized in**
**that** the bonding sheet (22) is covered with a protective film (24).

## Revendications

1. Matériau en bande (10) extensible avec au moins une couche de support (12) et une couche de recouvrement (14), le matériau en bande (10) présentant une pluralité de plis (16) dont les arêtes croisent le sens d'extension (18) et sont sensiblement parallèles les unes aux autres,
**caractérisé en ce que**
la couche de support (12) contient des fibres en matériau organique,
la couche de recouvrement (14) présente une feuille en métal ductile et
les plis se présentent sous forme de plis microscopiques (16) contigus dans lesquels le matériau supplémentaire nécessaire à l'extension est emmagasiné.

2. Matériau en bande extensible selon la revendication 1,
**caractérisé en ce que**
la couche de support (12) se présente sous la forme d'un non-tissé.

3. Matériau en bande extensible selon la revendication 1,
**caractérisé en ce que**
la couche de support (12) se présente sous la forme d'un tissu.

4. Matériau en bande extensible selon la revendication 1,
**caractérisé en ce que**
la couche de support (12) se présente sous la forme d'une matière à mailles.

5. Matériau en bande extensible selon l'une des revendications 1 à 4,
**caractérisé en ce que**
la couche de recouvrement présente au moins deux couches.

6. Matériau en bande extensible selon l'une des revendications 1 à 5,
**caractérisé en ce que**
ledit matériau en bande (10) est, de plus, ondulé transversalement par rapport aux arêtes des plis microscopiques (16).

7. Matériau en bande extensible selon l'une des revendications 1 à 6,
**caractérisé en ce que**
ledit matériau en bande (10) présente, de plus, un revêtement (20) en matériau plastiquement déformable.

8. Matériau en bande extensible selon l'une des revendications 1 à 7,
**caractérisé en ce que**
ledit matériau extensible (10) présente, au moins sur l'un des ses deux bords longitudinaux, une couche adhésive (22) en matériau autocollant élastique.

9. Matériau en bande extensible selon la revendication 8,
**caractérisé en ce que**
la couche adhésive (22) est appliquée sur la couche de support (12).

10. Matériau en bande extensible selon la revendication 8 ou 9,
**caractérisé en ce que**
la couche adhésive (22) est recouverte d'une feuille de protection (24).
